# EUROPÄISCHE PATENTSCHRIFT

(11) **EP 1 561 054 B1**
(45) Veröffentlichungstag und Bekanntmachung des Hinweises auf die Patenterteilung: **18.01.2006**
(21) Anmeldenummer: 03753500.2
(22) Anmeldetag: 02.10.2003
(51) Int. Cl.: F16H 61/42, B60K 28/16, B60K 17/356

(54) **STEUERUNG FÜR EINEN HYDROSTATISCHEN FAHRANTRIEB**
CONTROL FOR HYDROSTATIC POWER TRAIN
COMMANDE POUR UN GROUPE PROPULSEUR HYDROSTATIQUE

(30) Priorität: 15.10.2002 DE 10248028
(43) Veröffentlichungstag der Anmeldung: 10.08.2005
(73) Patentinhaber: Brueninghaus Hydromatik GmbH, 89275 Elchingen (DE)
(72) Erfinder: SHRIVE, Chris, Dunfermline KY 12 8 DP (GB); PERRY, Graham, Edinburgh EH10 6UG (GB); ESSIG, Heinz-Gerhard, 89173 Lonsee (DE)
(74) Vertreter: Körfer, Thomas
(86) Internationale Anmeldenummer: PCT/EP2003/010986
(87) Internationale Veröffentlichungsnummer: WO 2004/036093

(56) Entgegenhaltungen:
- EP-A- 0 226 844
- EP-A- 1 079 153
- EP-A- 1 223 069
- DE-A- 19 638 421
- US-A- 4 976 332

## Beschreibung

Die Erfindung betrifft eine Steuerung für einen hydrostatischen Fahrantrieb.

Hydrostatische Fahrantriebe, bei denen zwei Hydromotoren mit einer Hydropumpe verbunden sind und die Hydropumpe von einem Antriebsmotor angetrieben wird, sind als Fahrantriebe von Arbeitsmaschinen wie beispielsweise Straßenwalzen bekannt. Um bei einem solchen System, bei dem jeweils ein Hydromotor der Vorder- bzw. der Hinterachse zugeordnet ist, die Drehmomentverteilung der einzelnen Motoren an die Einsatzbedingungen, also beispielsweise Bergfahrt oder Talfahrt, anzupassen, sind verschiedene Systeme zur Traktionssteuerung bekannt.

In der DE 101 01 748 A1 ist beispielsweise ein System vorgeschlagen, bei dem einer elektronischen Steuereinheit Signale von Drucksensoren, die in der förderseitigen bzw. in der saugseitigen Hauptleitung angeordnet sind, zugeführt werden. Auf Grund des Verlaufs der Drucksignale sowie des Verlaufs der Position eines Fahrhebels wird durch die elektronische Steuereinheit die jeweilige Fahrsituation des Fahrzeugs ermittelt. Hierzu wird ein Schwellwert verwendet, der in Abhängigkeit von dem Verlauf der Position des Fahrhebels korrigiert wird, um verschiedene Fahrsituationen eindeutig voneinander unterscheiden zu können. Wird durch einen der Drucksensoren ein Druckwert ermittelt, der den korrigierten Schwellwert überschreitet, so wird die von der elektronischen Steuereinheit ermittelte Fahrsituation dazu verwendet, an eine Verstellvorrichtung des bergseitigen Hydromotors ein elektrisches Signal zu Verstellung in Richtung kleineren Schluckvolumens zu senden.

Das in der DE 101 01 748 A1 vorgeschlagene System hat den Nachteil, dass der bauliche Aufwand relativ groß ist. So sind nicht nur in beiden Hauptleitungen Drucksensoren erforderlich, sondern darüber hinaus ein elektronisches Steuergerät, welches in der Lage ist, den Verlauf der Position des Fahrhebels zumindest kurzfristig zu speichern, um somit nicht nur einen momentanen Istwert auswerten zu können, sondern die Änderung der Fahrhebelposition in die Ermittlung der Fahrsituation einbeziehen kann.

Aus der DE 196 38 421 A1 ist weiterhin eine Traktionssteuerung bekannt, bei der ein Gefällesensor dazu verwendet wird, eine unerwünschte Verstellung eines talseitigen Hydromotors in Richtung kleinerer Schwenkwinkel zu verhindern. Das System basiert auf eine Traktionssteuerung, welche aufgrund von Drehzahlsensoren voneinander abweichende Radumfangsgeschwindigkeiten an der Vorder- bzw. Hinterachse erkennt und durch ein Verstellen des Schluckvolumens eine Drehzahlanpassung des entsprechenden Hydromotors vornimmt. Dabei kann die Situation entstehen, dass die Radumfangsgeschwindigkeit der talseitigen Achse bei einer Hergabfahrt durch auftretenden Schlupf kleiner ist als die Radumfangsgeschwindigkeit an der bergseitigen Achse. Aufgrund des regelnden Eingriffs der Traktionssteuerung würde dies zu einer Verstellung des talseitigen Hydromotors in Richtung kleineren Schwenkwinkels führen, um die Drehzahl des Hydromotors zu erhöhen, was allerdings eine Reduzierung des Moments zur Folge hat. Um bei einer Talfahrt das Bremsmoment zu erhalten, wird die Information eines Gefällesensor verwendet, um die von der Traktionssteuerung an die Verstellvorrichtung des Hydromotors gegebenen Steuerbefehle zu unterdrücken und somit die Verstellung des Hydromotors in Richtung kleineren Schwenkwinkels zu verhindern. Durch den Gefällesensor wird also eine Verstellung des Schwenkwinkels des Hydromotors verhindert.

Das aus der DE 196 38 421 A1 bekannte System hat den Nachteil, dass ein Eingreifen durch die Traktionssteuerung lediglich dann erfolgt, wenn bereits ein Schlupf aufgetreten ist. Eine Reduzierung des übertragenen Drehmoments an einer der Achsen, bevor es zum Auftreten von Schlupf an einer der Achsen kommt, ist dagegen nicht vorgesehen.

Der Erfindung liegt die Aufgabe zugrunde, eine Steuerung für einen hydrostatischen Fahrantrieb zu schaffen, bei der auf einfache Weise eine präventive Verstellung von Hydromotoreinheiten erfolgt, um der Neigung zum Ausbilden von Schlupf entgegenzuwirken.

Die Aufgabe wird durch die erfindungsgemäße Steuerung für einen hydrostatischen Fahrantrieb mit den Merkmalen des Anspruchs 1 sowie alternativ der nebengeordneten Ansprüche 2 und 13 gelöst.

Bei der erfindungsgemäßen Steuerung für den hydrostatischen Fahrantrieb ist von Vorteil, dass die unterschiedliche Verteilung der Antriebsmomente auf die Vorder- bzw. Hinterachse des Fahrzeugs aufgrund eines einfachen Signals erfolgt. Gemäß den Patentansprüchen 1 und 2 ist dieses einfache Signal entweder die über den Fahrhebel vorgegebene Fahrtrichtung oder die Neigungsrichtung des Fahrzeuges, welche durch einen Neigungssensor ermittelt wird. Entsprechend der Fahrtrichtung oder der ermittelten Neigung des Fahrzeugs wird ein Steuerventil betätigt, durch das mittels einer an der jeweiligen Hydromotoreinheit vorgesehenen Variationsvorrichtung eine Hydromotoreinheit in Richtung kleineren Schluckvolumens verstellt wird. Durch die Verstellung der Hydromotoreinheit in Richtung kleineren Schluckvolumens wird das an der entsprechenden Achse übertragbare Drehmoment verringert, so dass einer Entstehung von Schlupf entgegengewirkt wird.

Bei dem Gegenstand des Patentanspruchs 13 wird an Stelle eines elektrischen Signals das Vorzeichen der Druckdifferenz zwischen einer ersten und einer zweiten Hauptleitung verwendet, um die Variationsvorrichtung der jeweiligen Hydromotoreinheit mittels einer Steuerventileinheit so mit Druck zu beaufschlagen, dass eine der beiden Hydromotoreinheiten in Richtung kleineren Schwenkwinkels verstellt wird. Die Verwendung des Vorzeichen der Druckdifferenz zwischen der ersten und der zweiten Hauptleitung hat dabei den Vorteil, dass sowohl für Vorwärtsfahrt als auch für Rückwärtsfahrt jeweils die Hydromotoreinheit derjenigen Achse in Richtung kleineren Schluckvolumens verstellt wird, die zur Bergseite hin orientiert ist. Durch die Druckumkehr in der ersten und zweiten Hauptleitung bei einer Talfahrt wird dabei auch für eine Talfahrt die jeweils zur Bergseite hin orientierte Hydromotoreinheit in Richtung kleineren Drehmoments verschwenkt, so dass auch beim Bremsen bergab eine optimale Momentenverteilung an den Achsen erreicht wird.

In den Unteransprüchen sind vorteilhafte Weiterbildungen der erfindungsgemäßen Steuerung dargestellt.

Insbesondere ist es vorteilhaft, an dem Steuerventil bzw. der Steuerventileinheit eine zusätzliche Schaltposition vorzusehen, in der sowohl die Hydromotoreinheit der Vorderachse wie auch die Hydromotoreinheit der Hinterachse in Richtung kleineren Schluckvolumens verstellt sind, um somit eine höhere Fahrgeschwindigkeit beispielsweise für eine Transportfahrt zu ermöglichen.

Ein weiterer Vorteil ist es, gleichzeitig mit der Verstellung einer Hydromotoreinheit in Richtung kleineren Drehmoments das Schluckvolumen der anderen Hydromotoreinheit entgegengesetzt in Richtung größeren Schluckvolumes zu verstellen, so dass die Summe der Schluckvolumen konstant bleibt. Hierfür kann insbesondere vorteilhaft eine Hydromotoreinheit verwendet werden, welche aus mehreren Hydromotoren besteht, die jeweils ein konstantes Schluckvolumen haben. Zur Veränderung des Schluckvolumens einer solchen Hydromotoreinheit kann dann jeweils einer der Hydromotoren zugeschaltet bzw. abgeschaltet werden.

Gemäß einer anderen vorteilhaften Weiterbildung ist vorgesehen, dass das Schluckvolumen der Hydromotoreinheiten kontinuierlich verstellbar ist. Hierzu ist das Steuerventil bzw. die Steuerventileinheit ebenso wie die an den Variationsvorrichtungen jeweils vorgesehenen Stellventile als kontinuierlich verstellbare Ventile ausgeführt. Insbesondere bei Verwendung eines Neigungssensors, welcher nicht nur das Vorhandensein eines Gefälles oder einer Steigung sondern auch deren Steilheit ermittelt, kann somit eine kontinuierliche Verschiebung des Verhältnisses zwischen dem Drehmoment an der Vorderachse und an der Hinterachse erfolgen.

Bevorzugte Ausführungsbeispiele der erfindungsgemäßen Steuerung für einen hydrostatischen Fahrantrieb sind in der Zeichnung dargestellt und werden anhand der nachfolgenden Beschreibung näher erläutert. Es zeigen:
- Fig. 1: eine schematische Darstellung eines hydrostatischen Fahrantriebs mit einem ersten Ausführungsbeispiel einer erfindungsgemäßen Steuerung;
- Fig. 2: eine schematische Darstellung eines hydrostatischen Fahrantriebs mit einem zweiten Ausführungsbeispiel einer erfindungsgemäßen Steuerung;
- Fig. 3: eine schematische Darstellung eines hydrostatischen Fahrantriebs mit einem dritten Ausführungsbeispiel einer erfindungsgemäßen Steuerung;
- Fig. 4: eine schematische Darstellung eines hydrostatischen Fahrantriebs mit einem vierten Ausführungsbeispiel einer erfindungsgemäßen Steuerung;
- Fig. 5: eine schematische Darstellung eines hydrostatischen Fahrantriebs mit einem fünften Ausführungsbeispiel einer erfindungsgemäßen Steuerung;
- Fig. 6: eine schematische Darstellung eines hydrostatischen Fahrantrieb mit einem sechsten Ausführungsbeispiel einer erfindungsgemäßen Steuerung; und
- Fig. 7: ein Beispiel für ein Fahrzeug mit einem mit der erfindungsgemäßen Steuerung ausgerüsteten hydrostatischen Fahrantrieb.

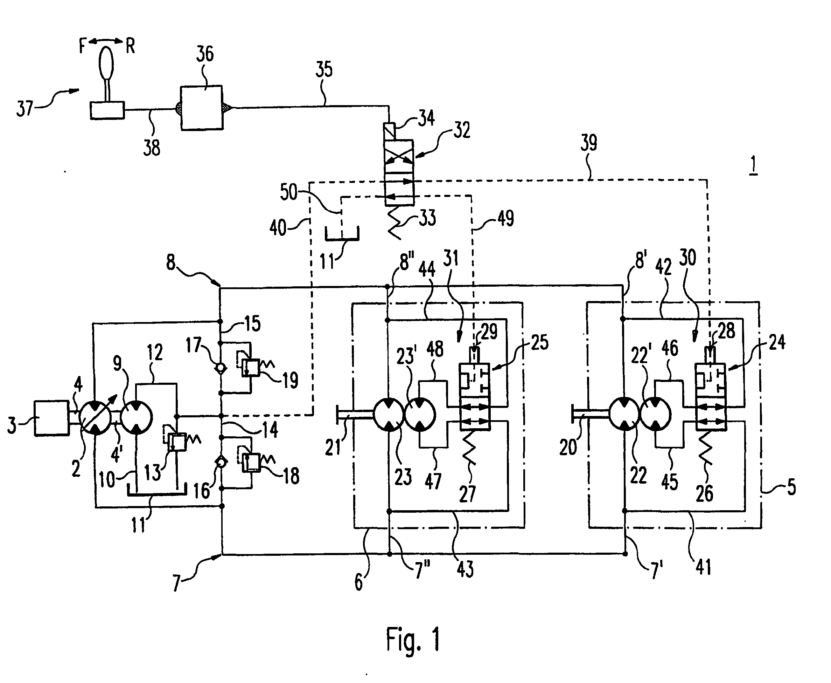

Ein erstes Ausführungsbeispiel für eine erfindungsgemäße Steuerung eines hydrostatischen Fahrantriebs ist in der Fig. 1 dargestellt. Ein hydrostatischer Fahrantrieb 1 umfasst eine Pumpe 2, die von einer Antriebsmaschine 3 angetrieben wird. Die Pumpe 2 ist über eine Antriebswelle 4 mit der Antriebsmaschine 3 verbunden ist. Weiterhin umfasst der hydrostatische Fahrantrieb eine erste Hydromotoreinheit 5 sowie eine zweite Hydromotoreinheit 6. Die erste Hydromotoreinheit 5 und die zweite Hydromotoreinheit 6 sind parallel über eine erste Hauptleitung 7 und eine zweite Hauptleitung 8 mit der Pumpe 2 verbunden. Je nach Förderrichtung der Pumpe 2 erfolgt die Zuleitung des Hydraulikfluids aus der ersten Hauptleitung 7 über eine erste Verbindungsleitung 7' zu der ersten Hydromotoreinheit 5 und über eine zweite Verbindungsleitung 7" zu der zweiten Hydromotoreinheit 6 oder, bei einer Förderung in der entgegengesetzten Richtung, aus der zweiten Hauptleitung 8 über eine dritte Verbindungsleitung 8' zu der ersten Hydromotoreinheit 5 und über eine vierte Verbindungsleitung 8" zu der zweiten Hydromotoreinheit 6.

Die Pumpe 2 ist in ihrem Fördervolumen verstellbar und für eine Förderung in zwei Richtungen geeignet. Das Fördervolumen wird durch eine nicht dargestellte Verstellvorrichtung eingestellt. Die Verstellvorrichtung kann dabei mit Signalen aus einer ebenfalls nicht dargestellten elektronischen Steuereinheit verstellt werden, wobei vorzugsweise die elektronische Steuereinheit auch auf die Antriebsmaschine 3 einwirkt und diese hinsichtlich Leistung und Drehzahl einstellt. Über einen Abschnitt 4' der Antriebswelle 4 wird von der Antriebsmaschine 3 eine Hilfspumpe 9 angetrieben. Die Hilfspumpe 9 ist für die Förderung in einer Richtung geeignet und in ihrem Fördervolumen fest eingestellt. Auf ihrer Saugseite ist die Hilfspumpe 9 über eine Saugleitung 10 mit einem Tankvolumen 11 verbunden. In einer förderseitig mit der Hilfspumpe 9 verbundenen Leitung 12 ist ein Druckbegrenzungsventil 13 vorgesehen, welches die Leitung 12 bei Überschreiten eines durch eine Feder vorgegebenen Maximaldrucks in das Tankvolumen 11 entspannt. Die Leitung 12 ist über eine erste Zuleitung 14 mit der ersten Hauptleitung 7 verbunden und über eine zweite Zuleitung 15 mit der zweiten Hauptleitung 8 verbunden.

In der ersten bzw. zweiten Zuleitung 14 bzw. 15 ist jeweils ein in Richtung der ersten Hauptleitung 7 bzw. der zweiten Hauptleitung 8 öffnendes erstes Rückschlagventil 16 bzw. zweites Rückschlagventil 17 angeordnet. Parallel zu dem ersten bzw. zweiten Rückschlagventil 16 bzw. 17 ist jeweils ein Maximaldruckbegrenzungsventil 18 bzw. 19 vorgesehen, welches die erste Hauptleitung 7 bzw. die zweite Hauptleitung 8 bei Übersteigen eines maximal für die Hauptleitungen 7 bzw. 8 zulässigen Drucks über die Leitung 12 und das Druckbegrenzungsventil 13 in das Tankvolumen 11 entspannt.

Die erste Hydromotoreinheit 5 treibt über eine erste Abtriebswelle 20 beispielsweise einer an der Vorderachse einer Straßenwalze angeordnete Walze an. Eine zweite, an der Hinterachse einer Straßenwalze angeordnete Walze wird über eine zweite Abtriebswelle 21 von der zweiten Hydromotoreinheit 6 angetrieben. Die erste Hydromotoreinheit 5 und die zweite Hydromotoreinheit 6 sind vorzugsweise identisch aufgebaut und umfassen je einen ersten Hydromotor 22 bzw. 23 sowie einen jeweils dem ersten Hydromotor 22 bzw. 23 zugeordneten zweiten Hydromotor 22' bzw. 23'. Der erste und der zweite Hydromotor 22 und 22' der ersten Hydromotoreinheit 5 sowie der erste und zweiten Hydromotor 23 und 23' der zweiten Hydromotoreinheit 6 sind für einen Antrieb in beide Richtungen ausgelegt und besitzen jeweils ein konstantes Schluckvolumen. Das Schluckvolumen der beiden ersten Hydromotoren 22 und 23 ist dabei vorzugsweise identisch. Ebenso ist das Schluckvolumen der beiden zweiten Hydromotoren 22' bzw. 23' vorzugsweise identisch. Die Schluckvolumen des ersten Hydromotors 22 und des zweiten Hydromotors 22' bzw. des ersten Hydromotors 23 und des zweiten Hydromotor 23' können sich dagegen unterscheiden.

Der zweite Hydromotor 22' der ersten Hydromotoreinheit 5 sowie der zweite Hydromotor 23' der zweiten Hydromotoreinheit 6 sind zu- und abschaltbar ausgeführt. Um den zweiten Hydromotor 22' bzw. 23' zuzuschalten bzw. abzuschalten ist jeweils ein Stellventil 24 bzw. 25 in der ersten Hydromotoreinheit 5 bzw. der zweiten Hydromotoreinheit 6 vorgesehen. Die Stellventile 24 und 25 werden durch jeweils eine Stellventilfeder 26 bzw. 27 in einer Ausgangsposition gehalten. An den Stellventilen 24 und 25 ist jeweils eine Steuerfläche 28 bzw. 29 vorgesehen, welche mit einem Steuerdruck beaufschlagt ist, die das jeweilige Stellventil 24 bzw. 25 entgegen der Kraft der Stellventilfeder 26 bzw. 27 aus seiner Ausgangsposition auslenkt.

Befindet sich das Steuerventil 24 bzw. 25 in seiner Ausgangsposition, so wird das aus der ersten Hauptleitung 7 bzw. der zweiten Hauptleitung 8 der jeweiligen Hydromotoreinheit 5 oder 6 zugeführte Druckmittel auch dem jeweils zweiten Hydromotor 22' bzw. 23' zugeführt. Hierzu zweigt von der ersten Verbindungsleitung 7' eine erste Zuschaltleitung 41 ab, die über das Stellventil 24 in seiner Ausgangsposition mit einer ersten Anschlussleitung 45 und damit mit einem Eingang des zweiten Hydromotors 22' verbunden ist. Ein zweiter Anschluss des zweiten Hydromotors 22' ist über eine zweite Anschlussleitung 46 über das Stellventil 24 in seiner Ausgangsposition über eine zweite Zuschaltleitung 42 mit der dritten Verbindungsleitung 8' verbunden. Der zweite Hydromotor 23' der zweiten Hydromotoreinheit 6 ist analog über eine dritte bzw. vierte Anschlussleitung 47 bzw. 48, die in der Ausgangsposition des Stellventils 25 mit einer dritten und vierten Zuschaltleitung 43 bzw. 44 verbunden sind mit der zweiten Verbindungsleitung 7" bzw. der vierten Verbindungsleitung 8" verbunden.

Befindet sich dagegen das Stellventil 24 in der entgegengesetzten Endposition, so werden die erste und zweite Anschlussleitung 45 und 46 des zweiten Hydromotors 22' der ersten Hydromotoreinheit 5 miteinander verbunden. Der zweite Hydromotor 22' ist in dieser Schaltposition des Stellventils 24 kurzgeschlossen und trägt nicht zur Erzeugung eines Drehmoments an der ersten Abtriebswelle 20 bei. In entsprechender Weise werden die dritte Anschlussleitung 47 mit der vierten Anschlussleitung 48 miteinander verbunden, wenn sich das Stellventil 25 in der entgegengesetzten Endposition befindet. Das Stellventil 24 wirkt mit dem Hydromotor 22' der ersten Hydromotoreinheit 5 zu einer ersten Variationsvorrichtung 30 zusammen. Das Stellventil 25 wirkt mit dem Hydromotor 23' der zweiten Hydromotoreinheit 6 zu einer zweiten Variationsvorrichtung 31 zusammen.

Zur Ansteuerung der ersten Variationsvorrichtung 30 und der zweiten Variationsvorrichtung 31 ist ein Steuerventil 32 vorgesehen. Das Steuerventil 32 wird durch eine Steuerventilfeder 33 in einer ersten Schaltposition gehalten. Entgegen der Kraft der Steuerventilfeder 33 ist das Steuerventil 32 durch einen Elektromagneten 34 mit einer Kraft beauschlagbar. Der Elektromagnet 34 ist über eine Signalleitung 35 mit einer elektronischen Einrichtung 36 verbunden, die in Abhängigkeit der Position eines Fahrhebels 37 den Elektromagneten 34 mit einem Schaltstrom beaufschlagt. Über eine weitere Signalleitung 38 erhält die elektronische Einrichtung 36 von dem Fahrhebel 37 ein Signal, ob die Position des Fahrhebels in Richtung Vorwärtsfahrt oder in Richtung Rückwärtsfahrt zeigt.

In dem dargestellten Ausführungsbeispiel ist das Steuerventil 32 als Schaltventil ausgeführt, welches in Abhängigkeit von dem an dem Elektromagneten 34 anliegenden Signal zwischen einer ersten und einer zweiten Schaltposition umschaltet. In der ersten Schaltposition, in der sich im Ruhezustand das Steuerventil 32 durch die Steuerventilfeder 33 befindet, ist die Steuerfläche 28 des Stellventils 24 der ersten Hydromotoreinheit 5 über eine erste Steuerdruckleitung 39 mit einer Entnahmeleitung 40 verbunden. Die Entnahmeleitung 40 ist an dem von dem Steuerventil 32 abgewandten Ende mit der Leitung 12 verbunden, so dass in der ersten Schaltposition des Steuerventils 32 die Steuerfläche 28 des Stellventils 24 der ersten Hydromotoreinheit 5 mit dem in der Leitung 12 herrschenden Druck beaufschlagt wird. Der durch die Hilfspumpe 9 in der Leitung 12 erzeugte Druck ist ausreichend, um die Gegenkraft der Stellventilfeder 26 zu überwinden, so dass das Stellventil 24 in Richtung der der Ausgangsposition entgegengesetzten Endposition verstellt wird. Durch die Verstellung des Stellventils 24 in seine der Ausgangsposition entgegengesetzten Endposition werden die erste und zweite Anschlußleitung 45 und 46 des zweiten Hydromotors 22' kurzgeschlossen, so dass, wie vorstehend bereits ausgeführt wurde, der zweite Hydromotor 22' keinen Beitrag zum Drehmoment an der ersten Abtriebswelle 20 liefert.

Gleichzeitig wird in der ersten Schaltposition des Steuerventils 32 die Steuerfläche 29 des Stellventils 25 der zweiten Hydromotoreinheit 6 über eine zweite Steuerdruckleitung 49 mit einer Entlastungsleitung 50 verbunden, die auf ihrer von dem Steuerventil 32 abgewandten Seite in das Tankvolumen 11 ausmündet. Das Stellventil 25 der zweiten Hydromotoreinheit 6 befindet sich daher aufgrund der Kraft der Stellventilfeder 27 in seiner Ausgangsposition. Das Stellventil 25 verbindet in seiner Ausgangsposition eine dritte Zuschaltleitung 43 mit der dritten Anschlussleitung 47 und eine vierten Zuschaltleitung 44 mit dem vierten Anschlussleitung 48. Die dritte und vierte Zuschaltleitung 43 bzw. 44 sind über die zweite Verbindungsleitung 7" und die vierte Verbindungsleitung 8" mit der ersten Hauptleitung 7 bzw. der zweiten Hauptleitung 8 verbunden, so dass das von der Pumpe 2 in eine der Hauptleitungen 7 oder 8 geförderte Druckmittel auch zu dem zweiten Hydromotor 23' der zweiten Hydromotoreinheit 6 gefördert wird. An der zweiten Abtriebswelle 21 wirkt daher ein Drehmoment, dass von dem Hydromotor 23 und dem zweiten Hydromotor 23' erzeugt wird.

Fährt das Fahrzeug, beispielsweise eine Straßenwalze, vorwärts, so hat der Bediener den Fahrhebel 37 in Richtung einer Vorwärtsfahrt F ausgelenkt. Die Auslenkung des Fahrhebels 37 in Richtung einer Vorwärtsfahrt F wird über die weitere Signalleitung 38 der elektronischen Einrichtung 36 übermittelt. In der elektronischen Einrichtung 36 wird ein für den Elektromagneten 34 geeignetes steuersignal oder direkt ein Schaltstrom erzeugt, welches über die Signalleitung 35 an den Elektromagneten 34 übermittelt wird. Im dargestellten Ausführungsbeispiel wird aufgrund dieses Signals der Elektromagnet 34 nicht bestromt, so dass das Steuerventil 32 aufgrund der Steuerventilfeder 33 in seiner ersten Schaltposition gehalten wird.

Die Hilfspumpe 9 wird von der Antriebsmaschine 3 über den Abschnitt 4' der Antriebswelle 4 angetrieben und erzeugt einen Druck, der über die Entnahmeleitung 40 der Steuerfläche 28 des Stellventils 24 der ersten Hydromotoreinheit 5 zugeführt wird. In dem in der Fig. 1 dargestellten Ausführungsbeispiel ist die erste Hydromotoreinheit 5 der Vorderachse der Straßenwalze zugeordnet. In Abhängigkeit von der gewünschten Fahrgeschwindigkeit erzeugt die Pumpe 2 einen Volumenstrom welcher in die zweite Hauptleitung 8 gefördert wird und über die dritte Verbindungsleitung 8' sowie die vierte Verbindungsleitung 8 " sowohl der ersten Hydromotoreinheit 5 als auch der zweiten Hydromotoreinheit 6 zugeführt wird. Durch den an der Steuerfläche 28 des Stellventils 24 der ersten Hydromotoreinheit 5 anliegenden Steuerdruck sind die erste Anschlussleitung 45 und die zweite Anschlussleitung 46 des zweiten Hydromotors 22' der ersten Hydromotoreinheit 5 kurzgeschlossen, so dass an der Vorderachse über die erste Abtriebswelle 20 lediglich das Drehmoments anliegt, welches durch den ersten Hydromotor 22 der ersten Hydromotoreinheit 5 erzeugt wird.

Bei der der Hinterachse zugeordneten zweiten Hydromotoreinheit 6 wirkt dagegen an der zweiten Abtriebswelle 21 ein höheres Drehmoments, welches auf Grund des zugeschalteten zweiten Hydromotors 23' und des Hydromotors 23 erzeugt wird. Hierzu ist über das Stellventil 25 der zweite Hydromotor 23' der zweiten Hydromotoreinheit 6 zugeschaltet, indem er über die dritte und vierte Zuschaltleitung 43 bzw. 44 mit der ersten Hauptleitung 7 bzw. der zweiten Hauptleitung 8 verbunden ist.

Durch diese ungleiche Verteilung der Drehmomente auf die Vorderachse und die Hinterachse des angetriebenen Fahrzeugs wird bei einer Bergfahrt die durch die Neigung der Ebene entlastete Achse mit einem geringeren Moment angetrieben. Fährt ein Fahrzeug vorwärts einen Berg hinauf, so neigt zunächst die Vorderachse dazu, durchzurutschen. Diese Tendenz zum Auftreten von Schlupf wird durch die Verringerung des Moments an der Vorderachse entgegengewirkt. Die beschriebene Verteilung der Drehmomente auf die Vorderachse bzw. Hinterachse wird dabei unabhängig von einer tatsächlich auftretenden Bergfahrt prophylaktisch vorgenommen, so dass auch bei einer Vorwärtsfahrt in der Ebene bereits das Drehmoment an der Vorderachse gegenüber dem Drehmoment an der Hinterachse verringert ist. Die Gefahr von Erkennungsfehlern der jeweiligen Fahrsituation ist durch das einfache Zugrundelegen der Fahrtrichtung reduziert. Zudem entspricht die Verteilung des Drehmoments zugunsten des Antriebs der Hinterachse bei Vorwärtsfahrt auch den Anforderungen, welche bei einer Fahrt in der Ebene auftreten, da während einer Beschleunigung die Hinterachse ein höheres Drehmoments übertragen kann als die Vorderachse.

Bei einem Wechsel der Fahrtrichtung wird durch den Bediener der Fahrhebel 37 aus der Richtung für Vorwärtsfahrt F in Richtung für Rückwärtsfahrt R bewegt. Das geänderte Fahrtrichtungssignal wird durch die elektronische Einrichtung 36 wiederum in ein für den Elektromagneten geeignetes Signal umgewandelt und über die Signalleitung 35 an den Elektromagneten 34 übermittelt. Entsprechend dem nun an dem Elektromagneten 34 anliegenden Signal ist der Elektromagnet 34 bestromt und schaltet das Steuerventil 32 in seine zweite Schaltposition. In der zweiten Schaltposition ist die Entnahmeleitung 40 mit der zweiten Steuerdruckleitung 49 verbunden, so dass der von der Hilfspumpe 9 erzeugte Druck an der Steuerfläche 29 des Stellventils 25 der zweiten Hydromotoreinheit 6 anliegt. Entsprechend wird nunmehr die erste Steuerdruckleitung 39 mit der Entlastungsleitung 50 verbunden. Damit wird die Steuerfläche 28 des Stellventils 24 der ersten Hydromotoreinheit 5 durch die Verbindung mit dem Tankvolumen 11 vom Druck entlastet, so dass das Stellventil 24 aufgrund der Stellventilfeder 26 in seine Ausgangsposition zurückkehrt.

In der zweiten Schaltposition des Steuerventils 32 ist folglich der zweite Hydromotor 23' abgeschaltet, indem die dritte Anschlussleitung 47 mit der vierten Anschlussleitung 48 durch das Stellventil 25 kurzgeschlossen ist. Der zweite Hydromotor 22' der ersten Hydromotoreinheit 5 ist dagegen über die erste Zuschaltleitung 41 und die zweite Zuschaltleitung 42 mit der ersten Hauptleitung 7 bzw. der zweiten Hauptleitung 8 verbunden und liefert somit einen Beitrag zu dem an der ersten Abtriebswelle 20 verfügbaren Drehmoment. Wird also der Fahrhebel 37 in Richtung einer Rückwärtsfahrt ausgelenkt, so wird an der Hinterachse ein kleineres Drehmoment erzeugt als an der Vorderachse. Damit wird jeweils an der in Fahrtrichtung gesehen vorderen Achse ein geringeres Drehmoment erzeugt.

Das gesamte Schluckvolumen bleibt dabei jeweils konstant, da für einen zugeschalteten zweiten Hydromotor 22' der ersten Hydromotoreinheit 5 entsprechend der zweite Hydromotor 23' der zweiten Hydromotoreinheit 6 abgeschaltet wird und umgekehrt. Durch diese Kompensation der Änderung des Schluckvolumens an der ersten oder zweiten Hydromotoreinheit 5 oder 6 wird die Steuerung des Fördervolumens der Pumpe 2 vereinfacht.

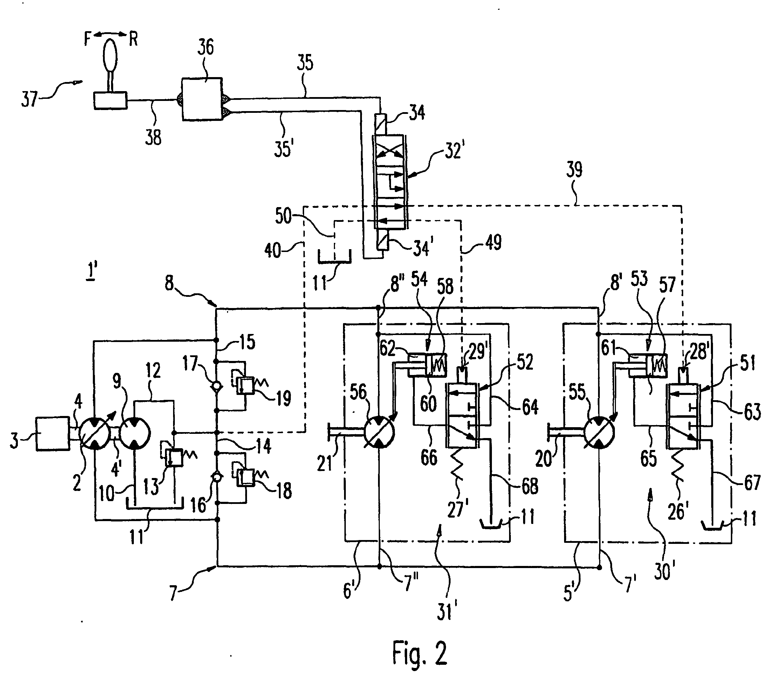

In der Fig. 2 ist ein zweites Ausführungsbeispiel einer erfindungsgemäßen Steuerung dargestellt, wobei identische Bauteile mit identischen Bezugszeichen versehen sind. Um Wiederholungen zu vermeiden wird auf die Beschreibung der Fig. 1 verwiesen.

Im Unterschied zu dem ersten Ausführungsbeispiel der Fig. 1 sind in dem hydrostatischen Fahrantrieb nach Fig. 2 eine erste Hydromotoreinheit 5' und eine zweite Hydromotoreinheit 6' vorgesehen, welche einen ersten Hydromotor 55 bzw. einen zweiten Hydromotor 56 aufweisen, wobei der erste und der zweite Hydromotor 55 und 56 in ihrem Schluckvolumen einstellbar sind. Es können beispielsweise Maschinen in Schrägscheibenbauweise zum Einsatz kommen, bei denen das Schluckvolumen durch Einstellung des Schwenkwinkels der Schrägscheibe eingestellt wird.

Zum Einstellen des Schluckvolumens des ersten Hydromotors 55 bzw. des zweiten Hydromotors 56 ist ein Steuerventil 32' vorgesehen, welches eine erste und eine zweite Schaltposition einnehmen kann, die identisch mit der ersten und zweiten Schaltposition des Steuerventils 32 aus Fig. 1 sind. Zusätzlich kann das Steuerventil 32' eine dritte Schaltposition einnehmen und ist kontinuierlich verstellbar. Die Ansteuerung des Steuerventils 32' erfolgt über den Elektromagneten 34 und in die entgegengesetzte Richtung durch einen weiteren Elektromagneten 34'. Der weitere Elektromagnet 34' wird durch eine zusätzliche Signalleitung 35' von der elektronischen Einrichtung 36 gesteuert. Wird durch eine Auslenkung des Fahrhebels 37 in Richtung einer Vorwärtsfahrt F ein entsprechendes Signal über die weitere Signalleitung 38 an die elektronische Einrichtung 36 übermittelt, so wird im dargestellten Ausführungsbeispiel mittels der zusätzlichen Signalleitung 35' der weitere Elektromagnet 34' bestromt, und das Steuerventil 32' befindet sich in seiner ersten Schaltposition.

In der ersten Schaltposition ist die Entnahmeleitung 40 mit der ersten Steuerdruckleitung 39 verbunden. Die zweite Steuerdruckleitung 49 wird dagegen über die Entlastungsleitung 50 in das Tankvolumen 11 entspannt.

Die erste Hydromotoreinheit 5' und die zweite Hydromotoreinheit 6' sind identisch aufgebaut. Die erste Hydromotoreinheit 5' weist neben dem verstellbaren ersten Hydromotor 55, welcher die erste Abtriebswelle 20 antreibt, eine Variationsvorrichtung 30' auf. Die Variationsvorrichtung 30' besteht im wesentlichen aus einem Stelldruckregelventil 51 als Stellventil sowie einer Verstellvorrichtung 53. Die Verstellvorrichtung 53 wirkt auf einen Verstellmechanismus des ersten Hydromotors 55 und stellt dessen Schluckvolumen ein. Die Verstellvorrichtung 53 umfasst eine Vorspannfeder 57 die einen Stellkolben 59 mit einer Kraft beaufschlagt und den ersten Hydromotor 55 in Richtung maximalen Schluckvolumens verstellt. Entgegengesetzt zu der Vorspannfeder 57 wirkt in einer Stelldruckkammer 61 eine hydraulische Kraft auf den Stellkolben 59. Die Größe der hydraulische Kraft auf den Stellkolben 59 ist durch Veränderung des Drucks in der Stelldruckkammer 61 über das Stelldruckregelventil 51 einstellbar.

Das Stelldruckregelventil 51 ist hierzu zwischen einer ersten und einer zweiten Endposition kontinuierlich verstellbar, wobei es durch eine Stelldruckregelventilfeder 26' in Richtung seiner ersten Endpositionen gedrückt wird. In dieser ersten Endpositionen des Stelldruckregelventils 51 wird die Stelldruckkammer 61 über eine Stelldruckanschlussleitung 65 mit einer Tankleitung 67 verbunden, die die Stelldruckkammer 61 in das Tankvolumen 11 entspannt.

Entgegengesetzt zu der Kraft der Stelldruckregelventilfeder 26' wirkt auf das Stelldruckregelventil 51 an der Steuerfläche 28' eine hydraulische Kraft, wenn über die erste Steuerdruckleitung 39 ein Druck zugeführt wird. In der ersten Schaltposition des Steuerventils 32' wird die Steuerfläche 28' über die erste Steuerdruckleitung 39, die mit der Entnahmeleitung 40 verbunden ist von der Hilfspumpe 9 bedrückt. Das Stelldruckregelventil 51 wird in Richtung seiner zweiten Endposition verstellt, in der eine Stelldruckleitung 63 mit der Stelldruckanschlussleitung 65 verbunden wird. Die Stelldruckanschlussleitung 63 ist mit der dritten Verbindungsleitung 8' verbunden, so dass in dieser Endposition die Stelldruckkammer 61 mit dem Druck der zweiten Hauptleitung 8 bedrückt wird. Der ansteigende Druck in der Stelldruckkammer 61 bewegt den Stellkolben 59 entgegen der Kraft der Vorspannfeder 57 und verstellt damit den ersten Hydromotor 55 in Richtung kleineren Schwenkwinkels.

Durch das Steuerventil 32' ist gleichzeitig die zweite Steuerdruckleitung 49 mit der Entlastungsleitung 50 verbunden, so dass der die Steuerfläche 29' beaufschlagende Druck in das Tankvolumen 11 entspannt wird. Das Stelldruckregelventil 52 als Stellventil der zweiten Hydromotoreinheit 6' befindet sich daher aufgrund der Stelldruckregelventilfeder 27' in seiner ersten Endposition, in der die Stelldruckkammer 62 der Verstellvorrichtung 54 der Variationsvorrichtung 31' der zweiten Hydromotoreinheit 6' über eine Stelldruckanschlussleitung 66 und eine Tankleitung 68 mit dem Tankvolumen 11 verbunden ist. Die zweite Hydromotoreinheit 6' ist damit in Richtung großen Schwenkwinkels eingestellt.

Analog zu dem Beispiel aus Fig. 1 ist damit in einer ersten Schaltposition des Steuerventils 32' die Hydromotoreinheit 5' so eingestellt, dass auf die erste Abtriebswelle 20, welche wiederum der Vorderachse des Fahrzeugs entspricht, ein kleineres Drehmoment wirkt, als auf die zweite Antriebswelle 21. Wird der Fahrhebel 37 nun aus der Position für Vorwärtsfahrt F in eine Position für Rückwärtsfahrt R bewegt, so wird diese neue Position durch die elektronische Einrichtung 36 in entsprechende Steuersignale für die Elektromagneten 34,34' umgesetzt. Der weitere Elektromagnet 34' wird nunmehr nicht mehr bestromt, stattdessen wird über die Signalleitung 35 der Elektromagnet 34 bestromt und verstellt das Steuerventil 32' in Richtung seiner zweiten Schaltposition. In der zweiten Schaltposition ist die Entnahmeleitung 40 mit der zweiten Steuerdruckleitung 49 verbunden und die erste Steuerdruckleitung 39 mit der Entlastungsleitung 50. Dadurch wird, wiederum analog zu dem Ausführungsbeispiel aus Fig. 1 bzw. der vorstehend beschriebenen Verstellung der Hydromotoreinheiten 5' und 6', die zweite Hydromotoreinheit 6' in Richtung kleineren Schluckvolumens verstellt und die erste Hydromotoreinheit 5' in Richtung größeren Schluckvolumens verstellt. Die Veränderung des Schluckvolumens der ersten Hydromotoreinheit 5' bzw. der zweiten Hydromotoreinheit 6' sind dabei wiederum vorzugsweise gleichgroß.

Zusätzlich kann das Steuerventil 32' eine dritte Schaltposition einnehmen. In der dritten Schaltposition sind sowohl die erste Steuerdruckleitung 39 als auch die zweite Steuerdruckleitung 49 mit der Entnahmeleitung 40 verbunden. Zum Einnehmen der dritten Schaltposition werden beide Elektromagneten 34, 34' entsprechend durch die elektronische Einrichtung 36 angesteuert, wenn erkannt wird, dass durch den Bediener eine hohe Fahrgeschwindigkeit vorgegeben ist. Eine solche Vorgabe einer hohen Fahrgeschwindigkeit kann aufgrund eines Überschreitens einer bestimmten Position durch den Fahrhebel 37 durch die elektronische Einrichtung 36 ermittelt werden. Die dritte Schaltposition des Steuerventils 32' entspricht einem Schnellgang. In dieser Position werden sowohl die erste Hydromotoreinheit 5' als auch die zweite Hydromotoreinheit 6' in Richtung kleineren Schwenkwinkels verstellt. Damit wird zwar das übertragbare Drehmoment reduziert, gleichzeitig jedoch die Drehzahl des ersten und zweiten Hydromotors 55 bzw. 56 für ein bestimmtes Fördervolumen der Pumpe 2 erhöht, wodurch sich eine höhere Geschwindigkeit des angetriebenen Fahrzeugs ergibt.

Sowohl für das Steuerventil 32' als auch für das Stelldruckregelventil 51 bzw. 52 kann eine kontinuierliche Einstellung zwischen dem jeweiligen Endpositionen vorgesehen sein, so dass auch der erste Hydromotor 55 und der zweite Hydromotor 56 in ihrem jeweiligen Schluckvolumen kontinuierlich verstellbar sind.

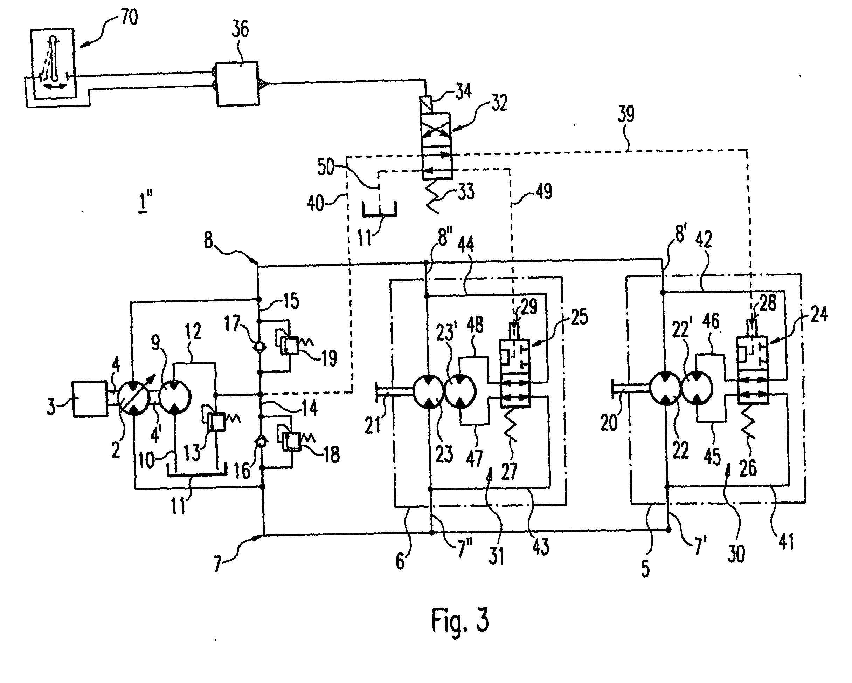

In Fig. 3 ist ein Ausführungsbeispiel der erfindungsgemäßen Steuerung dargestellt, bei der anstelle des Fahrhebels 37 aus Fig. 1 ein Neigungssensor 70 vorgesehen ist. Durch den Neigungssensor ist die Neigung des Fahrzeugs bezüglich der Ebene zuerkennen. Erkennt der Neigungssensor 70, dass sich das Niveau der Vorderachse über dem Niveau der Hinterachse befindet, so wird durch die elektronische Einrichtung 36 der Elektromagnet 34 nicht bestromt und das Steuerventil 32 befindet sich in seiner ersten Schaltposition, die durch die Steuerventilfeder 33 festgelegt ist. In dieser Schaltposition des Steuerventils 32 ist, wie dies ausführlich zur Fig. 1 erläutert wurde, die erste Hydromotoreinheit 5 in Richtung kleineren Drehmoments eingestellt und so wird das Drehmoment an der Vorderachse präventiv verringert.

Befindet sich dagegen das Fahrzeug in einer Situation, in der das Niveau der Hinterachse höher ist als das Niveau der Vorderachse, so schaltet die elektronische Einrichtung 36 einen Strom auf den Elektromagneten 34, der damit das Steuerventil 32 in seine zweite Schaltposition bringt. In der zweiten Schaltposition wird das Drehmoment der zweiten Antriebswelle 21 durch ein Abschalten des zweiten Hydromotors 23' der zweiten Hydromotoreinheit 6 reduziert.

Die Verstellung des Schluckvolumens der Hydromotoreinheiten 5 und 6 erfolgt allein auf Grund der ermittelten Neigung des Fahrzeugs. Damit kann entsprechend der Vorgehensweise aus Fig. 1 bereits bevor es zum Auftreten von Schlupf an der Vorder- oder der Hinterachse kommt, das Schluckvolumen der ersten Hydromotoreinheit 5 bzw. der zweiten Hydromotoreinheit 6 so verstellt werden, dass die Tendenz zum Ausbilden von Schlupf reduziert ist. Die Verwendung des Neigungssensors 70 ermöglicht dabei, jeweils die auf der Bergseite befindliche Achse mit einem geringeren Drehmoment zu beaufschlagen. Durch das präventive Verstellen des Schluckvolumens der ersten Hydromotoreinheit 5 bzw. der zweiten Hydromotoreinheit 6 wird aufgrund eines einfachen Signals des Neigungssensors 70 eine jeweils an die Fahrsituation angepasste Verteilung des Drehmoments an der ersten Abtriebswelle 20 bzw. der zweiten Abtriebswelle 21 ermöglicht.

In der Fig. 3 ist ein Neigungssensor 70 ausreichend, welcher lediglich zwei Schaltposition für die beiden unterschiedlichen Neigungs-Richtungen hat, ein sog. Neigungs-Schalter. Die Verwendung des Gefällesensors 70 ist jedoch nicht auf das Ausführungsbeispiel nach Fig. 3 beschränkt, sondern kann auch in Kombination mit der variablen Verstellmöglichkeit der Fig. 2 eine Anpassung der Verteilung des Drehmoments an das jeweilige Gefälle ermöglichen. Hierzu ist ein Neigungssensor 70 vorgesehen, der ein kontinuierliches Signal in Abhängigkeit von der Neigung ausgibt.

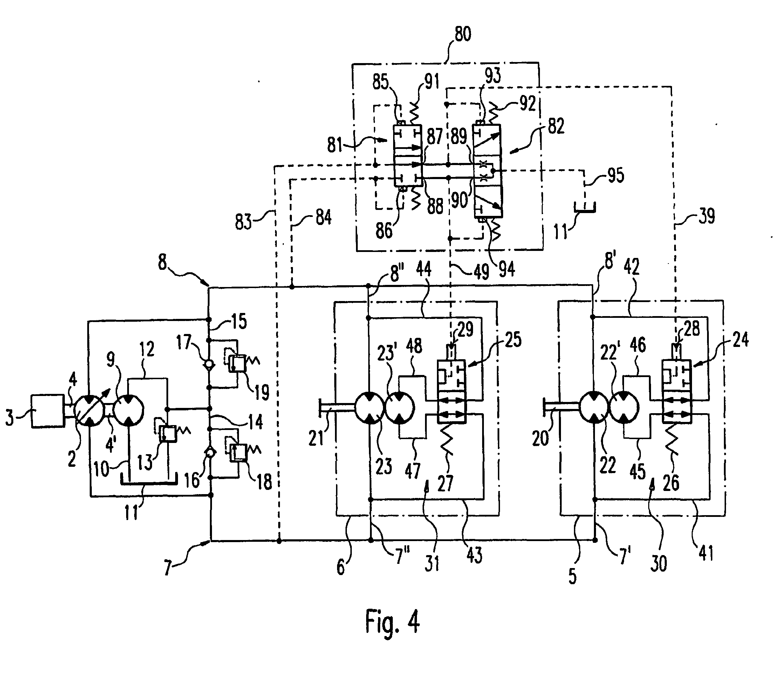

In Fig. 4 ist ein weiteres Beispiel für eine erfindungsgemäße Steuerung dargestellt, bei der anstelle eines Fahrtrichtungs- oder Gefällesignals das Verhältnis des in der ersten Hauptleitung 7 und in der zweiten Hauptleitung 8 herrschenden Drucks zur Steuerung verwendet wird. Die erste Hydromotoreinheit 5 und die zweite Hydromotoreinheit 6 sind identisch mit denen aus der Fig. 1 und wurden dort bereits ausführlich erläutert. Im vorliegenden Ausführungsbeispiel wird die erste Steuerdruckleitung 39 und die zweite Steuerdruckleitung 49 anstelle des Steuerventils 32 durch eine Steuerventileinheit 80 mit einem Druck beaufschlagt bzw. mit dem Tankvolumen 11 verbunden.

Die steuerventileinheit 80 umfasst ein Auswahlventil 81 und ein Entlastungsventil 82. Eingangsseitig ist das Auswahlventil 81 über eine erste Hauptleitungsabzweigung 83 mit der ersten Hauptleitung 7 verbunden und über eine zweite Hauptleitungsabzweigung 84 mit der zweiten Hauptleitung 8. Die erste Hauptleitungsabzweigung 83 ist weiterhin mit einer ersten Messfläche 85 verbunden, durch welche das Auswahlventil 81 mit einer Kraft beaufschlagt wird, die entgegengesetzt zu einer auf eine zweite Messfläche 86 wirkenden hydraulischen Kraft wirkt. Um an der zweiten Messfläche 86 eine hydraulische Kraft zu erzeugen, ist die zweite Messfläche 86 mit der zweiten Hauptleitungsabzweigung 84 verbunden. Zusätzlich sind an dem Auswahlventil 81 Auswahlventilfedern 91 vorgesehen, wobei jeweils eine Auswahlventilfeder in Richtung der ersten bzw. der zweiten Messfläche 85 bzw. 86 eine Kraft auf das Auswahlventil 81 ausübt. Fördert die Pumpe 2 beispielsweise bei der bezüglich der Fig. 1 beschriebenen Vorwärtsfahrt in die zweite Hauptleitung 8, so übersteigt der Druck in der zweiten Hauptleitung 8 den Druck in der ersten Hauptleitung 7. Entsprechend wird über die zweite Hauptleitungsabzweigung 84 der zweiten Messfläche 86 ein größerer Druck zugeführt, als der ersten Messfläche 85. Bei einem solchen Druckgefälle befindet sich das Auswahlventil 81 in seiner in der Fig. 4 dargestellten ersten Schaltposition. In dieser ersten Schaltposition des Auswahlventils 81 wird eine Verbindung zwischen der ersten Hauptleitungsabzweigung 83 und einem ersten Ausgang 87 des Auswahlventils 81 hergestellt. Die Verbindung zwischen der zweiten Hauptleitungsabzweigung 84 und dem zweiten Ausgang 88 des Auswahlventils 81 bleibt dagegen unterbrochen.

Das Entlastungsventil 82 weist einen ersten Eingang 89 und einen zweiten Eingang 90 auf, wobei der erste Eingang 89 mit dem ersten Ausgang 87 des Auswahlventils 81 und der zweite Eingang 90 mit dem zweiten Ausgang 88 des Auswahlventils 81 verbunden ist. Weiterhin ist mit dem ersten Eingang 89 des Entlastungsventils 82 die erste Steuerdruckleitung 39 verbunden. Mit dem zweiten Eingang 90 des Entlastungsventils 82 ist die zweite Steuerdruckleitung 49 verbunden.

In der beschriebenen ersten Schaltposition des Auswahlventils 81 wird der erste Eingang 89 des Entlastungsventils 82 und damit auch die erste Steuerdruckleitung 39 mit der ersten Hauptleitungsabzweigung 83 verbunden. Mit der ersten Steuerdruckleitung 39 ist zudem eine dritte Messfläche 93 verbunden, durch die das Entlastungsventil 82 mit einer hydraulischen Kraft beaufschlagt wird, die entgegengesetzt zu einer hydraulischen Kraft gerichtet ist, die an einer vierten Messfläche 94 angreift. Die vierte Messfläche 94 ist mit der zweiten Steuerdruckleitung 49 verbunden. Da die zweite Steuerdruckleitung 49 in der beschriebenen ersten Schaltposition des Auswahlventils 81 nicht mit einem Druck beaufschlagt ist, wird durch den an der dritten Messfläche 93 angreifenden Druck das Entlastungsventil 93 in eine erste Position gebracht, in der der zweite Eingang 90 des Entlastungsventils 82 über eine weitere Tankleitung 95 mit dem Tankvolumen 11 verbunden ist.

Demnach ist in der ersten Position des Entlastungsventils 82 die zweite Steuerdruckleitung 49 mit dem Tankvolumen 11 verbunden und die erste Steuerdruckleitung 39 über die erste Hauptleitungsabzweigung 83 mit der ersten Hauptleitung 7 verbunden.

Bei einer Druckumkehr in der ersten Hauptleitung 7 und der zweiten Hauptleitung 8 wird das Auswahlventil 81 in eine zweite Schaltposition gebracht, in der die zweite Hauptleitungsabzweigung 84 mit dem zweiten Ausgang 88 verbunden wird, so dass über die zweite Steuerdruckleitung 49 die Steuerfläche 29 des Stellventils 25 der zweiten Hydromotoreinheit 6 mit einem Steuerdruck beaufschlagt wird. Der Steuerdruck ist also jeweils der Druck derjenigen Hauptleitung 7 oder 8, der niedriger ist, liegt aber immer noch deutlich über dem Druckniveau des Tankvolumens 11. Durch die Verbindung des zweiten Ausgangs 88 mit der zweiten Hauptleitungsabzweigung 84 wird die vierte Messfläche 94 mit einer hydraulischen Kraft beaufschlagt, die das Entlastungsventil 82 in seine zweite Position bringt, wobei in der zweiten Position der erste Eingang 89 über die weitere Tankleitung 95 mit dem Tankvolumen 11 verbunden wird, so dass die Steuerfläche 28 des Stellventils 24 der ersten Hydromotoreinheit 5 entlastet wird.

Die Verstellung der Hydromotoren aufgrund der jeweils an den Steuerflächen anliegenden Drücke entspricht den Ausführungen zu Fig. 1.

Das Auswahlventil 81 und infolgedessen das Entlastungsventil 82 wird dabei lediglich auf Grund des Vorzeichen der Druckdifferenz zwischen der ersten Hauptleitung 7 und der zweiten Hauptleitung 8 geschaltet. Dies bedeutet, dass auch ohne das Auftreten von Schlupf bei einer Fahrt in der Ebene der Fahrtrichtungswechsel durch eine entsprechende Druckänderung in der ersten bzw. zweiten Hauptleitung 7 bzw. 8 zu einer Anpassung der Verteilung der Drehmomente führt. Da ausschließlich das Vorzeichen der Druckdifferenz verwendet wird, wird auch eine Druckumkehr erkannt, wenn sie beispielsweise durch eine Bergabfahrt verursacht wird. Durch die Steuerventileinheit 80 wird dabei jeweils, unabhängig von der Fahrtrichtung des Fahrzeugs, die zur Bergseite hin orientierte Hydromotoreinheit auf ein geringeres Schluckvolumen verstellt.

Um die Länge der erforderlichen Anschlussleitungen zu reduzieren, ist es auch möglich, jeweils eine Steuerventileinheit 80 in jeder der beiden Hydromotoreinheiten 5, 6 zu integrieren. Die für die Ansteuerung erforderlichen Drücke der ersten Hauptleitung 7 und der zweiten Hauptleitung 8 sind dort ohnehin bereits vorhanden.

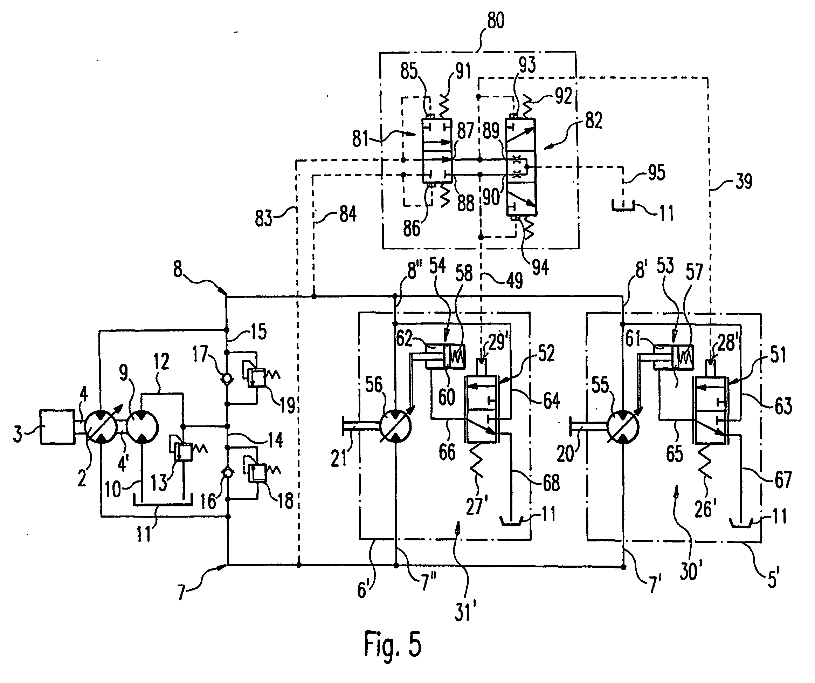

In der Fig. 5 ist eine Kombination der Steuerventileinheit 80 aus Fig. 4 zusammen mit den verstellbaren Hydromotoreinheiten 5' und 6' aus Fig. 2 dargestellt, wobei in diesem Ausführungsbeispiel die sämtlich verwendeten Ventile jeweils kontinuierlich zwischen ihren Endpositionen verstellt werden können.

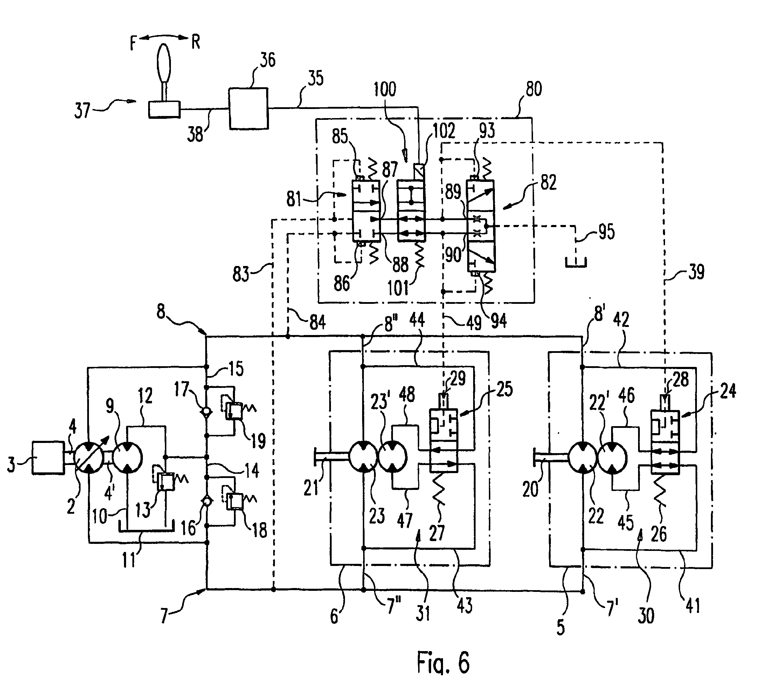

In Fig. 6 ist eine Weiterbildung der erfindungsgemäßen Steuerung aus Fig. 4 dargestellt. Als Erweiterung ist hierbei zwischen dem Auswahlventil 81 und dem Entlastungsventil 82 ein Übersteuerventil 100 dargestellt, dass in einer durch eine Übersteuerventilfeder 101 definierten Ruheposition den ersten Ausgang 87 des Auswahlventils 81 mit dem ersten Eingang 89 sowie den zweiten Ausgang 88 des Auswahlventils 81 mit dem zweiten Eingang 90 des Entlastungsventils 82 verbindet.

Durch einen Übersteuermagneten 102 kann das Übersteuerventil 100 in eine Übersteuerposition gebracht werden, in der zusätzlich der erste Eingang 89 und der zweite Eingang 90 des Entlastungsventils 82 miteinander verbunden werden. Dadurch werden sowohl die erste Steuerdruckleitung 39 als auch die zweite Steuerdruckleitung 49 mit dem jeweils niedrigeren Druck der Hauptleitungen 7 oder 8 beaufschlagt, und damit sowohl die erste Hydromotoreinheit 5 als auch die zweite Hydromotoreinheit 6 auf kleineres Schluckvolumen eingestellt. Bei konstantem Fördervolumen der Pumpe 2 ergibt sich daraus ein niedrigeres Drehmoment bei gleichzeitig erhöhter Fahrgeschwindigkeit.

Durch den gleichermaßen an der dritten und vierten Messfläche anliegenden Druck nimmt das Entlastungsventil eine mittige dritte Position ein. Dabei sind der erste Eingang 89 und der zweite Eingang 90 mit dem Tankvolumen 11 über die Tankleitung 95 verbunden. Die Verbindung erfolgt gedrosselt. Die Verbindung ermöglicht einer kleinen Ölmenge aus der niederdruckseitigen ersten bzw, zweiten Hauptleitung 7 bzw. 8 in das Tankvolumen 11 zu gelangen, wodurch eine zusätzliche Kühlung erreicht wird.

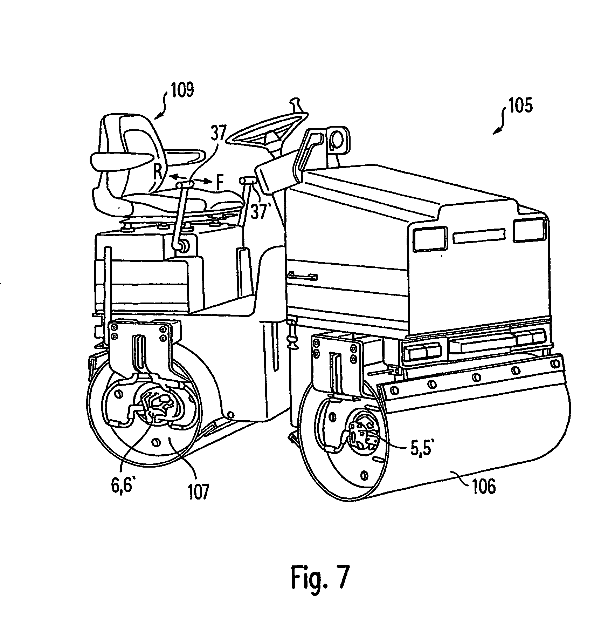

In Fig. 7 ist ein Beispiel für ein mit einer erfindungsgemäßen Steuerung ausgerüstetes Fahrzeug dargestellt. Das Fahrzeug 105 ist eine Straßenwalze mit einer vorderen Walze 106 und einer hinteren Walze 107, wobei die vordere Walze durch die erste Hydromotoreinheit 5 oder 5' und die hinteren Walze 107 durch die zweite Hydromotoreinheit 6 oder 6' angetrieben ist. Zur Vorgabe der Fahrtrichtung und der Fahrgeschwindigkeit ist der Fahrhebel 37 vorgesehen, wobei zur Vereinfachung der Bedienung während des Arbeitsbetriebes ein zweiter Fahrhebel 37' vorgesehen ist, so dass zu beiden Seiten eines Fahrersitzes 109 ein Fahrhebel für den Bediener verfügbar ist.

## Patentansprüche

1. Steuerung für einen hydrostatischen Fahrantrieb (1) mit zumindest einer Hydropumpe (2), die über eine erste und eine zweite Hauptleitung (7, 8) mit einer ersten Hydromotoreinheit (5, 5'), die eine Vorderachse antreibt, und einer zweiten Hydromotoreinheit (6, 6'), die eine Hinterachse antreibt, verbunden ist, wobei die erste und die zweite Hydromotoreinheit (5, 5', 6, 6') über eine erste bzw. eine zweite Variationsvorrichtung (30, 31, 30', 31') in ihrem Schluckvolumen verstellbar sind und wobei eine Fahrtrichtung als Vorwärtsfahrt (F) oder Rückwärtsfahrt (R) durch eine Position eines Fahrhebels (37) vorgegeben ist,
**dadurch gekennzeichnet,**
**dass** die erste und zweite Variationsvorrichtung (30, 31, 30', 31') durch ein Steuerventil (32, 32') angesteuert sind, wobei das Steuerventil (32, 32') bei einer durch die Position des Fahrhebels (37) festgelegte Vorwärtsfahrt (F) eine erste Schaltposition und bei einer durch den Fahrhebel (37) festgelegten Rückwärtsfahrt (R) eine zweite Schaltposition einnimmt, wobei in der ersten Schaltposition die erste Variationsvorrichtung (30, 30') so angesteuert ist, dass die erste Hydromotoreinheit (5, 5') in Richtung kleineren Schluckvolumens verstellt wird, und in der zweiten Position die zweite Variationsvorrichtung (31, 31') so angesteuert ist, dass die zweite Hydromotoreinheit (6, 6') in Richtung kleineren Schluckvolumens verstellt wird.

2. Steuerung für einen hydrostatischen Fahrantrieb (1) mit zumindest einer Hydropumpe (2), die über eine ersten und eine zweite Hauptleitung (7, 8) mit einer ersten Hydromotoreinheit (5, 5'), die eine Vorderachse antreibt, und einer zweiten Hydromotoreinheit (6, 6'), die eine Hinterachse antreibt, verbunden ist, wobei die erste und die zweite Hydromotoreinheit (5, 6, 5', 6') über eine erste bzw. eine zweite Variationsvorrichtung (30 , 31, 301, 31') in ihrem Schluckvolumen jeweils einstellbar sind und mit einem Neigungssensor (70) zur Ermittlung einer Neigungsrichtung als Neigung bergwärts oder Neigung talwärts,
**dadurch gekennzeichnet,**
**dass** die erste und zweite Variationsvorrichtung (30, 31, 30', 31') durch ein Steuerventil (32, 32') angesteuert sind, wobei das Steuerventil (32, 32') bei der Neigung bergwärts eine erste Schaltposition und bei der Neigung talwärts eine zweite Schaltposition einnimmt, wobei in der ersten Schaltposition die erste Variationsvorrichtung (30, 30') so angesteuert ist, dass die erste Hydromotoreinheit (5, 5') in Richtung kleineren Schluckvolumens verstellt wird und in der zweiten Position die zweite Variationsvorrichtung (31, 31') so angesteuert ist, dass die zweite Hydromotoreinheit (6, 6') in Richtung kleineren Schluckvolumens verstellt wird.

3. Steuerung nach Anspruch 1 oder 2,
**dadurch gekennzeichnet,**
**dass** eine Steuerfläche (28, 28') eines Stellventils (24, 51) der ersten Variationsvorrichtung (30, 30') in der ersten Schaltposition des Steuerventils (32, 32') mit einem Steuerdruck beaufschlagt ist und eine Steuerfläche (29, 29') eines Stellventils (25, 52) der zweiten Variationsvorrichtung (31, 31') mit einem Tankvolumen (11) verbunden ist und in der zweiten Schaltposition des Steuerventils (32, 32') die Steuerfläche (28, 28') des Stellventils (24, 51) der ersten Variationsvorrichtung (30, 30') mit dem Tankvolumen (11) verbunden ist und die Steuerfläche (29, 29') des Stellventils (25, 52) der zweiten Variationsvorrichtung (31, 31') mit dem Steuerdruck beaufschlagt ist.

4. Steuerung nach einem der Ansprüche 1 bis 3,
**dadurch gekennzeichnet,**
**dass** der Steuerdruck von einer Hilfspumpe (9) erzeugt ist.

5. Steuerung nach einem der Ansprüche 1 bis 4,
**dadurch gekennzeichnet,**
**dass** das Steuerventil (32) ein 4/2-Wegeventil ist.

6. Steuerung nach einem der Ansprüche 1 bis 4,
**dadurch gekennzeichnet,**
**dass** das Steuerventil (32') ein 4/3-Wegeventil ist.

7. Steuerung nach Anspruch 6,
**dadurch gekennzeichnet,**
**dass** in einer dritten Schaltposition die Steuerflächen (28, 29, 28', 29') der Stellventile (24, 25, 51, 52) der ersten und der zweiten Variationsvorrichtung (30, 31, 30', 31') mit dem Tankvolumen (11) verbunden sind.

8. Steuerung nach einem der Ansprüche 1 bis 7
**dadurch gekennzeichnet,**
**dass** das Steuerventil (32, 32') elektromagnetisch betätigt ist.

9. Steuerung nach einem der Ansprüche 1 bis 8,
**dadurch gekennzeichnet,**
**dass** die erste und die zweite Hydromotoreinheit (5, 6) jeweils zumindest zwei Hydromotoren (22, 22', 23, 23') umfasst, von denen mindestens einer zur Änderung des Schluckvolumens der Hydromotoreinheit (5, 6) zuschaltbar und abschaltbar ist.

10. Steuerung nach einem der Ansprüche 1 bis 8,
**dadurch gekennzeichnet,**
**dass** die erste und die zweite Hydromotoreinheit (5', 6') jeweils einen Verstellmotor (55, 56) umfasst.

11. Steuerung nach Anspruch 10,
**dadurch gekennzeichnet,**
**dass** das Steuerventil (32') zwischen der ersten und zweiten Schaltposition kontinuierlich einstellbar ist.

12. Steuerung nach Anspruch 11,
**dadurch gekennzeichnet,**
**dass** die Stellventile (51, 52) kontinuierlich zwischen zwei Endpositionen einstellbar sind.

13. Steuerung für einen hydrostatischen Fahrantrieb mit zumindest einer Hydropumpe (2), die über eine erste und eine zweite Hauptleitung (7, 8) mit einer ersten Hydromotoreinheit (5, 5'), die eine Vorderachse antreibt, und einer zweiten Hydromotoreinheit (6, 6'), die eine Hinterachse antreibt, verbunden ist, wobei die erste und die zweite Hydromotoreinheit (5, 6, 5', 6') über eine erste bzw. eine zweite Variationsvorrichtung (30, 31, 30', 31') in ihrem Schluckvolumen verstellbar sind,
**dadurch gekennzeichnet,**
**dass** die erste und zweite Variationsvorrichtung (30, 31, 30', 31') durch eine Steuerventileinheit (80) angesteuert sind, wobei die Steuerventileinheit (80) in Abhängigkeit von dem Vorzeichen der Druckdifferenz zwischen der ersten und zweiten Hauptleitung (7, 8) eine erste oder zweite Schaltposition einnimmt und in der ersten Schaltposition die erste Variationsvorrichtung (30, 30') so angesteuert ist, dass die erste Hydromotoreinheit (5, 5') in Richtung kleineren Schluckvolumens verstellt wird, und in der zweiten Position die zweite Variationsvorrichtung (31, 31') so angesteuert ist, dass die zweite Hydromotoreinheit (6, 6') in Richtung kleineren Schluckvolumens verstellt wird.

14. Steuerung nach Anspruch 13,
**dadurch gekennzeichnet,**
**dass** die Steuerventileinheit (80) ein Auswahlventil (81) und ein Entlastungsventil (82) umfasst und dass in einer ersten Schaltposition des Auswahlventils (81) ein erster Eingang (89) des Entlastungsventils (82) mit der ersten Hauptleitung (7) und in einer zweiten Schaltposition ein zweiter Eingang (90) des Entlastungsventils (82) mit der zweiten Hauptleitung (8) verbunden ist, wobei die mit dem Entlastungsventil (82) verbundene erste oder zweite Hauptleitung (7, 8) jeweils diejenige mit dem niedrigeren Druck ist.

15. Steuerung nach Anspruch 14,
**dadurch gekennzeichnet,**
**dass** eine Steuerfläche (28, 28') eines Stellventils (24, 51) der ersten Variationsvorrichtung (30, 30') mit dem ersten Eingang (89) des Entlastungsventils (82) verbunden ist und dass eine Steuerfläche (29, 29') eines Stellventils (25, 52) der zweiten Variationsvorrichtung (31, 31') mit dem zweiten Eingang (90) des Entlastungsventils (82) verbunden ist

16. Steuerung nach Anspruch 15,
**dadurch gekennzeichnet,**
**dass** das Entlastungsventil (82) in Abhängigkeit von einem an dem ersten oder zweiten Eingang (89, 90) anliegenden Druck in eine erste bzw. zweite Position geschaltet ist, wobei in der ersten Position der zweite Eingang (90) mit einem Tankvolumen (11) und in der zweiten Position der ersten Eingang (89) mit dem Tankvolumen (11) verbunden ist.

17. Steuerung nach einem der Ansprüche 13 bis 16,
**dadurch gekennzeichnet,**
**dass** die erste und die zweite Hydromotoreinheit (5, 6) jeweils zumindest zwei Hydromotoren (22, 22', 23, 23') umfasst, von denen mindestens einer zur Änderung des Schluckvolumens der Hydromotoreinheit (5, 6) zuschaltbar und abschaltbar ist.

18. Steuerung nach einem der Ansprüche 13 bis 16,
**dadurch gekennzeichnet,**
**dass** die erste und die zweite Hydromotoreinheit (5', 6') jeweils einen Verstellmotor (55, 56) umfasst.

19. Steuerung nach Anspruch 18,
**dadurch gekennzeichnet,**
**dass** das Auswahlventil (81) und das Entlastungsventil (82) zwischen jeweiligen Endpositionen kontinuierlich einstellbar sind.

20. Steuerung nach Anspruch 19,
**dadurch gekennzeichnet,**
**dass** die Stellventile (51, 52) kontinuierlich zwischen zwei Endpositionen einstellbar sind.

21. Steuerung nach einem der Ansprüche 13 bis 20,
**dadurch gekennzeichnet,**
**dass** zwischen dem Auswahlventil (81) und dem Entlastungsventil (82) ein Übersteuerventil (100) vorgesehen ist, welches in seiner Ruheposition jeweils einen ersten und einen zweiten Ausgang des Auswahlventils (81) mit dem ersten bzw. zweiten Eingang (89, 90) des Entlastungsventils (82) verbindet und das in einer Übersteuerposition beide Ausgänge (87, 88)) des Auswahlventils (81) mit beiden Eingängen (89, 90) des Entlastungsventils (82) verbindet.

22. Steuerung nach Anspruch 21,
**dadurch gekennzeichnet,**
**dass** sich das Entlastungsventil (82) in einer dritten Position befindet, wenn das Übersteuerventil (100) in seiner Übersteuerposition ist und in der dritten Position des Entlastungsventils (82) dessen erster und zweiter Eingang (89, 90) mit dem Tankvolumen (11) verbunden sind.

23. Steuerung nach einem der Ansprüche 13 bis 22,
**dadurch gekennzeichnet,**
**dass** jeweils eine Steuerventileinheit (80) in die erste Hydromotoreinheit (5, 5') bzw. in die zweite Hydromotoreinheit (6, 6') integriert ist.

24. Steuerung nach einem der Ansprüche 1 bis 23,
**dadurch gekennzeichnet,**
**dass** die Änderung des Schluckvolumens der ersten bzw. zweiten Hydromotoreinheit (5, bzw. 6, 5' bzw. 6') in Richtung kleineren Schluckvolumens durch eine entsprechende Änderung des Schluckvolumens der jeweils anderen Hydromotoreinheit (6, bzw. 5, 6'bzw 5') in Richtung größeren Schluckvolumens kompensiert ist.

## Claims

1. Controller for a hydrostatic traversing mechanism (1) with at least one hydraulic pump (2), which is connected via a first and a second main duct (7, 8) to a first hydraulic motor unit (5, 5') which drives a front axle and a second hydraulic motor unit (6, 6') which drives a rear axle, the absorption volume of the first and the second hydraulic motor unit (5, 5', 6, 6') being adjustable via a first and a second variation device (30, 31, 30', 31') respectively, and a direction of motion being specified as forward motion (F) or backward motion (R) by a position of a driving lever (37),
**characterized in that**
the first and second variation device (30, 31, 30', 31') are controlled by a control valve (32, 32'), the control valve (32, 32') taking a first switch position in the case of forward motion (F) being defined by the position of the driving lever (37) and a second switch position in the case of backward motion (R) being defined by the position of the driving lever (37), in the first switch position the first variation device (30, 30') being controlled so that the first hydraulic motor unit (5, 5') is adjusted in the direction of smaller absorption volume, and in the second position the second variation device (31, 31') being controlled so that the second hydraulic motor unit (6, 6') is adjusted in the direction of smaller absorption volume.

2. Controller for a hydrostatic traversing mechanism (1) with at least one hydraulic pump (2), which is connected via a first and a second main duct (7, 8) to a first hydraulic motor unit (5, 5') which drives a front axle and a second hydraulic motor unit (6, 6') which drives a rear axle, the absorption volume of the first and the second hydraulic motor unit (5, 6, 5', 6') being adjustable via a first and a second variation device (30, 31, 30', 31') respectively, and with an inclination sensor (70) to determine a direction of inclination as uphill inclination or downhill inclination,
**characterized in that**
the first and second variation device (30, 31, 30', 31') are controlled by a control valve (32, 32'), the control valve (32, 32') taking a first switch position in the case of uphill inclination and a second switch position in the case of downhill inclination, in the first switch position the first variation device (30, 30') being controlled so that the first hydraulic motor unit (5, 5') is adjusted in the direction of smaller absorption volume, and in the second position the second variation device (31, 31') being controlled so that the second hydraulic motor unit (6, 6') is adjusted in the direction of smaller absorption volume.

3. Controller according to Claim 1 or 2,
**characterized in that**
in the first switch position of the control valve (32, 32') a control pressure is applied to a control surface (28, 28') of a control valve (24, 51) of the first variation device (30, 30'), and a control surface (29, 29') of a control valve (25, 52) of the second variation device (31, 31') is connected to a tank volume (11), and in the second switch position of the control valve (32, 32') the control surface (28, 28') of the control valve (24, 51) of the first variation device (30, 30') is connected to the tank volume (11), and the control pressure is applied to the control surface (29, 29') of the control valve (25, 52) of the second variation device (31, 31').

4. Controller according to one of Claims 1 to 3,
**characterized in that**
the control pressure is generated by an auxiliary pump (9).

5. Controller according to one of Claims 1 to 4,
**characterized in that**
the control valve (32) is a 4/2-way valve.

6. Controller according to one of Claims 1 to 4,
**characterized in that**
the control valve (32') is a 4/3-way valve.

7. Controller according to Claim 6,
**characterized in that**
in a third switch position, the control surfaces (28, 29, 28', 29') of the control valves (24, 25, 51, 52) of the first and second variation device (30, 31, 30', 31') are connected to the tank volume (11).

8. Controller according to one of Claims 1 to 7,
**characterized in that**
the control valve (32, 32') is actuated electromagnetically.

9. Controller according to one of Claims 1 to 8,
**characterized in that**
the first and second hydraulic motor unit (5, 6) each include at least two hydraulic motors (22, 22', 23, 23'), of which at least one can be switched on and off to change the absorption volume of the hydraulic motor unit (5, 6).

10. Controller according to one of Claims 1 to 8,
**characterized in that**
the first and second hydraulic motor unit (5', 6') each include an adjustment motor (55, 56).

11. Controller according to Claim 10,
**characterized in that**
the control valve (32') is continuously adjustable between the first and second switch position.

12. Controller according to Claim 11,
**characterized in that**
the control valves (51, 52) are continuously adjustable between two final positions.

13. Controller for a hydrostatic traversing mechanism (1) with at least one hydraulic pump (2), which is connected via a first and a second main duct (7, 8) to a first hydraulic motor unit (5, 5') which drives a front axle and a second hydraulic motor unit (6, 6') which drives a rear axle, the absorption volume of the first and the second hydraulic motor unit (5, 6, 5', 6') being adjustable via a first and a second variation device (30, 31, 30', 31'),
**characterized in that**
the first and second variation device (30, 31, 30', 31') are controlled by a control valve unit (80), the control valve unit (80) taking a first or second switch position depending on the sign of the pressure difference between the first and second main duct (7, 8), and in the first switch position the first variation device (30, 30') being controlled so that the first hydraulic motor unit (5, 5') is adjusted in the direction of smaller absorption volume, and in the second position the second variation device (31, 31') being controlled so that the second hydraulic motor unit (6, 6') is adjusted in the direction of smaller absorption volume.

14. Controller according to Claim 13,
**characterized in that**
the control valve unit (80) includes a selection valve (81) and a relief valve (82), and that in a first switch position of the selection valve (81) a first input (89) of the relief valve (82) is connected to the first main duct (7) and in a second switch position a second input (90) of the relief valve (82) is connected to the second main duct (8), the first or second main duct (7, 8) which is connected to the relief valve (82) being the one with the lower pressure.

15. Controller according to Claim 14,
**characterized in that**
a control surface (28, 28') of a control valve (24, 51) of the first variation device (30, 30') is connected to the first input (89) of the relief valve (82), and that a control surface (29, 29') of a control valve (25, 52) of the second variation device (31, 31') is connected to the second input (90) of the relief valve (82).

16. Controller according to Claim 15,
**characterized in that**
the relief valve (82) is switched into a first or second position depending on the pressure which is present at a first or second input (89, 90), in the first position the second input (90) being connected to a tank volume (11), and in the second position the first input (89) being connected to the tank volume (11).

17. Controller according to one of Claims 13 to 16,
**characterized in that**
the first and second hydraulic motor unit (5, 6) each include at least two hydraulic motors (22, 22', 23, 23'), of which at least one can be switched on and off to change the absorption volume of the hydraulic motor unit (5, 6).

18. Controller according to one of Claims 13 to 16,
**characterized in that**
the first and second hydraulic motor unit (5', 6') each include an adjustment motor (55, 56).

19. Controller according to Claim 18,
**characterized in that**
the selection valve (81) and relief valve (82) are continuously adjustable between appropriate final positions.

20. Controller according to Claim 19,
**characterized in that**
the control valves (51, 52) are continuously adjustable between two final positions.

21. Controller according to one of Claims 13 to 20,
**characterized in that**
between the selection valve (81) and the relief valve (82) an over-control valve (100), which in its idle position connects a first and second output of the selection valve (81) to the first input and second output (89, 90) of the relief valve (82), and which in an over-control position connects both outputs (87, 88) of the selection valve (81) to both inputs (89, 90) of the relief valve (82), is provided.

22. Controller according to Claim 21,
**characterized in that**
the relief valve (82) is in a third position if the over-control valve (100) is in its over-control position, and in the third position of the relief valve (82) its first and second input (89, 90) are connected to the tank volume (11).

23. Controller according to one of Claims 13 to 22,
**characterized in that**
one control valve unit (80) is integrated into each of the first hydraulic motor unit (5, 5') and second hydraulic motor unit (6, 6').

24. Controller according to one of Claims 1 to 23,
**characterized in that**
the change of the absorption volume of the first or second hydraulic motor unit (5 or 6, 5' or 6') in the direction of smaller absorption volume is compensated for by a corresponding change of the absorption volume of the other hydraulic motor unit (6 or 5, 6' or 5') in the direction of greater absorption volume.

## Revendications

1. Commande pour un groupe propulseur (1) hydrostatique avec au moins une pompe hydraulique (2), qui est reliée par le biais d'une première et d'une seconde conduite principale (7, 8) à une première unité de moteurs hydrauliques (5, 5') qui entraîne un essieu avant, et à une seconde unité de moteurs hydraulique (6, 6') qui entraîne un essieu arrière, la première et la seconde unités de moteurs hydrauliques (5, 5', 6, 6') étant réglables dans leur volume d'absorption par le biais d'un premier et d'un second dispositif de variation (30, 31, 30', 31'), et un sens de la marche étant prédéfini comme marche avant (F) ou marche arrière (R) par une position d'un levier de marche (37), **caractérisée en ce que** le premier et le second dispositif de variation (30, 31, 30', 31') sont commandés par une soupape de distribution (32, 32'), la soupape de distribution (32, 32') prenant une première position de commutation lors d'une marche avant (F) établie par la position du levier de marche (37), et une seconde position de commutation lors d'une marche arrière (R) établie par le levier de marche (37), sachant qu'en première position de commutation le premier dispositif de variation (30, 30') est commandé de telle manière que la première unité de moteurs hydrauliques (5,5') est réglée dans le sens d'un plus faible volume d'absorption, et dans la seconde position le second dispositif de variation (31, 31') est commandé de telle façon que la seconde unité de moteurs hydrauliques (6, 6') est réglée dans le sens d'un plus faible volume d'absorption.

2. Commande pour un groupe propulseur (1) hydrostatique avec au moins une pompe hydraulique (2), qui est reliée par le biais d'une première et d'une seconde conduite principale (7, 8) à une première unité de moteurs hydrauliques (5, 5') qui entraîne un essieu avant, et à une seconde unité de moteurs hydraulique (6, 6') qui entraîne un essieu arrière, la première et la seconde unité de moteurs hydrauliques (5, 5', 6, 6') étant respectivement réglables dans leur volume d'absorption par le biais d'un premier et d'un second dispositif de variation (30, 31, 30', 31'), et avec un capteur d'inclinaison (70) pour déterminer un sens d'inclinaison comme inclinaison direction montagne ou inclinaison direction vallée, **caractérisée en ce que** le premier et le second dispositif de variation (30, 31, 30', 31') sont commandés par une soupape de distribution (32, 32'), la soupape de distribution (32, 32') prenant une première position de commutation en cas d'inclinaison direction montagne et une seconde position de commutation en cas d'inclinaison direction vallée, sachant qu'en première position de commutation le premier dispositif de variation (30, 30') est commandé de telle manière que la première unité de moteurs hydrauliques (5,5') est réglée dans le sens d'un plus faible volume d'absorption, et dans la seconde position le second dispositif de variation (31, 31') est commandé de telle façon que la seconde unité de moteurs hydrauliques (6, 6') est réglée dans le sens d'un plus faible volume d'absorption.

3. Commande selon la revendication 1 ou 2, **caractérisée en ce qu'**une surface de commande (28, 28') d'une soupape de réglage (24, 51) du premier dispositif de variation (30, 30') est alimentée avec une pression de commande dans la première position de commutation de la soupape de distribution (32, 32'), et une surface de commande (29, 29') d'une soupape de réglage (25, 52) du second dispositif de variation (31, 31') est reliée à un volume de réservoir (11), et dans la seconde position de commutation de la soupape de distribution (32, 32') la surface de commande (28, 28') de la soupape de réglage (24, 51) du premier dispositif de variation (30, 30') est reliée au volume de réservoir (11) et la surface de commande (29, 29') de la soupape de réglage (25, 52) du second dispositif de variation (31, 31') est alimentée en pression de commande.

4. Commande selon l'une des revendications 1 à 3, **caractérisée en ce que** la pression de commande est générée par une pompe auxiliaire (9).

5. Commande selon l'une des revendications 1 à 4, **caractérisée en ce que** la soupape de distribution (32) est un distributeur 4/2.

6. Commande selon l'une des revendications 1 à 4, **caractérisé en ce que** la soupape de distribution (32') est un distributeur 4/3.

7. Commande selon la revendication 6, **caractérisée en ce que** dans une troisième position de commutation les surfaces de commande (28, 29, 28', 29') des soupapes de réglage (24, 25, 51, 52) du premier et du second dispositif de variation (30, 31, 30', 31') sont reliées au volume de réservoir (11).

8. Commande selon l'une des revendications 1 à 7, **caractérisée en ce que** la soupape de distribution (32, 32') est actionnée de manière électromagnétique.

9. Commande selon l'une des revendications 1 à 8, **caractérisée en ce que** la première et la seconde unité de moteurs hydrauliques (5, 6) comprennent respectivement au moins deux moteurs hydrauliques (22, 22', 23, 23'), parmi lesquels au moins un peut être mis en marche et arrêté pour modifier le volume d'absorption de l'unité de moteurs hydrauliques (5, 6).

10. Commande selon l'une des revendications 1 à 8, **caractérisée en ce que** la première et la seconde unité de moteurs hydrauliques (5', 6') comprennent respectivement un moteur à cylindrée variable (55, 56).

11. Commande selon la revendication 10, **caractérisée en ce que** la soupape de distribution (32') est réglable en continu entre la première et la seconde position de commutation.

12. Commande selon la revendication 11, **caractérisé en ce que** les soupapes de réglage (51, 52) sont réglables en continu entre deux positions finales.

13. Commande pour un groupe propulseur hydrostatique avec au moins une pompe hydraulique (2), qui est reliée par le biais d'une première et d'une seconde conduite principale (7, 8) à une première unité de moteurs hydrauliques (5, 5') qui entraîne un essieu avant, et à une seconde unité de moteurs hydraulique (6, 6') qui entraîne un essieu arrière, la première et la seconde unité de moteurs hydrauliques (5, 5', 6, 6') étant réglables dans leur volume d'absorption par le biais d'un premier et/ou d'un second dispositif de variation (30, 31, 30', 31'), **caractérisée en ce que** le premier et le second dispositif de variation (30, 31, 30', 31') sont commandés par une unité de soupapes de distribution (80), l'unité de soupapes de distribution (80) prenant une première ou seconde position de commutation en fonction du signe de différence de pression entre la première et la seconde conduite principale (7, 8) et, dans la première position de commutation le premier dispositif de variation (30, 30') étant commandé de telle sorte que la première unité de moteurs hydrauliques (5,5') est réglée dans le sens d'un plus faible volume d'absorption, et dans la seconde position le second dispositif de variation (31, 31') est commandé de telle façon que la seconde unité de moteurs hydrauliques (6, 6') est réglée dans le sens d'un plus faible volume d'absorption.

14. Commande selon la revendication 13, **caractérisé en ce que** l'unité de soupapes de distribution (80) comprend une soupape de sélection (81) et une soupape de décharge (82) et **en ce que** dans une première position de commutation de la soupape de sélection (81) une première entrée (89) de la soupape de décharge (82) est reliée à la première conduite principale (7) et dans une seconde position de commutation une seconde entrée (90) de la soupape de décharge (82) est reliée à la seconde conduite principale (8),la première ou seconde conduite principale (7, 8) reliée à la soupape de décharge (82) étant respectivement celle comportant la plus faible pression.

15. Commande selon la revendication 14, **caractérisée en ce qu'**une surface de commande (28, 28') d'une soupape de réglage (24, 51) du premier dispositif de variation (30, 30') est reliée à la première entrée (89) de la soupape de décharge (82) et **en ce qu'**une surface de commande (29, 29') d'une soupape de réglage (25, 52) du second dispositif de variation (31, 31') est reliée à la seconde entrée (90) de la soupape de décharge (82).

16. Commande selon la revendication 15, **caractérisée en ce que** la soupape de décharge (82) est commutée dans une première et/ou seconde position en fonction d'une pression appliquée sur la première ou la seconde entrée (89, 90), la seconde entrée (90) étant reliée dans la première position à un volume de réservoir (11) et dans la seconde position la première entrée (89) étant reliée au volume de réservoir (11).

17. Commande selon l'une des revendications 13 à 16, **caractérisée en ce que** la première et la seconde unité de moteurs hydrauliques (5, 6) comprennent respectivement au moins deux moteurs hydrauliques (22, 22', 23, 23'), parmi lesquels au moins un peut être mis en marche et arrêté pour modifier le volume d'absorption de l'unité de moteurs hydrauliques (5, 6).

18. Commande selon l'une des revendications 13 à 16, **caractérisé en ce que** la première et la seconde unité de moteurs hydrauliques (5', 6') comprennent respectivement un moteur à cylindrée variable (55, 56).

19. Commande selon la revendication 18, **caractérisé en ce que** la soupape de sélection (81) et la soupape de décharge (82) sont réglables en continu entre des positions finales respectives.

20. Commande selon la revendication 19, **caractérisée en ce que** les soupapes de réglage (51, 52) sont réglables en continu entre deux positions finales.

21. Commande selon l'une des revendications 13 à 20, **caractérisé en ce qu'**entre la soupape de sélection (81) et la soupape de décharge (82) est prévue une soupape de surcharge (100), laquelle dans sa position de repos relie respectivement une première et une seconde sortie de la soupape de sélection (81) à une première et/ou seconde entrée (89, 90) de la soupape de décharge (82), et laquelle dans une position de surcharge relie les deux sorties (87, 88) de la soupape de sélection (81) aux deux entrées (89, 90) de la soupape de décharge (82).

22. Commande selon la revendication 21, **caractérisée en ce que** la soupape de décharge (82) se trouve dans une troisième position lorsque la soupape de surcharge (100) est dans sa position de surcharge et dans la troisième position de la soupape de décharge (82) la première et la seconde entrée (89, 90) de celle-ci sont reliées au volume de réservoir (11).

23. Commande selon l'une des revendications 13 à 22, **caractérisée en ce que** respectivement une unité de soupapes de distribution (80) est intégrée dans la première unité de moteurs hydrauliques (5, 5') et/ou dans la seconde unité de moteurs hydrauliques (6, 6').

24. Commande selon l'une des revendications 1 à 23, **caractérisée en ce que** la modification du volume d'absorption de la première et/ou de la seconde unité de moteurs hydrauliques (5 et/ou 6, 5' et/ou 6') est compensée dans le sens d'un plus faible volume d'absorption par une modification correspondante du volume d'absorption de l'autre unité respective de moteurs hydrauliques (6 et/ou 5, 6' et/ou 5') dans le sens d'un plus grand volume d'absorption.
